# EUROPÄISCHE PATENTANMELDUNG

(11) **EP 1 574 947 A2**
(43) Veröffentlichungstag der Anmeldung: **14.09.2005**
(21) Anmeldenummer: 05100671.6
(22) Anmeldetag: 01.02.2005
(51) Int. Cl.: G06F 3/14

(54) **Anordnung zur Ansteuerung eines Grafikdisplays**

(30) Priorität: 10.03.2004 DE 102004011701
(71) Anmelder: SIEMENS AKTIENGESELLSCHAFT, 80333 München (DE)
(72) Erfinder: Traidl, Markus, 93090 Frengkofen (DE); Schneeberger, Johann, 93133 Burglengenfeld (DE)

(57) **Zusammenfassung**

Die Erfindung betrifft eine Anordnung zur Ansteuerung eines Grafikdisplays (7) mit einer Recheneinheit (1) zur Erzeugung einer darzustellenden Bildinformation. Die Recheneinheit (1) ist mit einer Datenbus-Schnittstelle (4) und diese wiederum mit einer Umwandlungseinheit (6) verbunden, an welche das Grafikdisplay (7) angeschlossen ist. Die Bildinformation wird von der Recheneinheit (1) über die Datenbus-Schnittstelle (4) im Bus-Datenformat an die Umwandlungseinheit (6) gesendet und die Umwandlungseinheit (6) wandelt die Bildinformation aus dem Bus-Datenformat in Bildsignale (BS) und Bildsteuersignale (Pixel_Clk, H_Sync, V_Sync) um und überträgt diese an das Grafikdisplay (7). Erfindungswesentlich ist, dass die maximale Größe eines Datenpaketes im Bus-Datenformat mindestens der Datenmenge an Bildsignalen entspricht, die zur Ansteuerung einer Bildzeile des Grafikdisplays (7) erforderlich ist.

## Beschreibung

Die Erfindung betrifft eine Anordnung zur Ansteuerung eines Grafikdisplays mit einer Recheneinheit zur Erzeugung einer darzustellenden Bildinformation.

Sollen heutzutage digitale Bildinformationen, die von einer Recheneinheit, beispielsweise einem Mikroprozessor, erzeugt wurden, auf einem Grafikdisplay oder Monitor angezeigt werden, so verwendet man im allgemeinen externe oder interne Grafikkontroller, die zwischen die Recheneinheit und das Grafikdisplay geschaltet werden. Ein Grafikkontroller liest dabei die in einem Bildspeicher abgelegten Bildinformationen periodisch aus, wandelt sie in ein von dem Grafikdisplay verarbeitbares und darstellbares Grafik-Format um und gibt die umgewandelten Informationen an das Grafikdisplay weiter. Die vom Grafikdisplay verarbeit- und darstellbaren Signale bestehen zum einen aus so genannten Bildsignalen in Form der Ansteuersignale für die einzelnen Bildpunkte des Displays, worüber sowohl die Farbe als auch die Helligkeit der Bildpunkte definiert werden. Außerdem stellt der Grafikkontroller so genannte Bildsteuersignale zur Verfügung, welche einen Wechsel von Bildpunkt zu Bildpunkt (Pixel_Clk), einen horizontalen Zeilenrücklauf (H_Sync) sowie einen vertikalen Bildrücklauf (V_Sync) auslösen. Ein weiteres vom Grafikkontroller geliefertes Signal kann beispielsweise ein Signal zur Identifikation des Beginns und des Endes eines sichtbaren Bildbereiches sein (Disp_En).

Das Grafikdisplay selbst kann digital oder analog ansteuerbar sein. Im Fall eines digitalen Displays können die vom Grafikkontroller erzeugten digitalen Signale direkt verarbeitet und zur Anzeige gebracht werden, während bei einem analogen Display noch ein Digital-Analog-Wandler zwischengeschaltet werden muss.

Unter einem externen Grafikkontroller versteht man einen eigenständigen Halbleiterbaustein, welcher über eine Schnittstelle mit der Recheneinheit kommuniziert. In einem externen Grafikkontroller kann gleichzeitig ein Bildspeicher integriert sein. In diesem Fall überträgt dann der Mikroprozessor die Bildinformation an den externen Grafikkontroller, welcher sie in dem Bildspeicher ablegt und von dort zeilenweise abruft und zur Darstellung bringt. Ist kein Bildspeicher im Grafikkontroller vorhanden, so teilen sich der Mikroprozessor und der Grafikkontroller einen gemeinsamen Speicher. Der Mikroprozessor legt dann die Bildinformation in einem festgelegten Bildspeicherbereich ab, aus welchem sich der Grafikkontroller die Informationen abholt.

Bei einem internen, das heißt in der Recheneinheit integrierten Grafikkontroller, kann ein Grafikdisplay direkt an die Recheneinheit angeschlossen und von dieser angesteuert werden. Auch ein interner Grafikkontroller kann wieder einen eigenen, integrierten Bildspeicher aufweisen oder aber sich den Bildspeicher mit der Recheneinheit teilen.

In jedem Fall stellt die Verwendung eines Grafikkontrollers in einem elektronischen Gerät einen nicht zu vernachlässigenden Kostenfaktor dar, welcher insbesondere bei kleinen Geräten mit integriertem Display ins Gewicht fällt, deren Zahl in den letzten Jahren ständig zugenommen hat. Sofern sich der Grafikkontroller und die Recheneinheit den Bildspeicher teilen, ist außerdem ein zusätzlicher Aufwand zur Abstimmung der Speicherzugriffe erforderlich.

Aufgabe der vorliegenden Erfindung ist es, eine vereinfachte und kostengünstige Lösung einer Anordnung zur Ansteuerung eines Grafikdisplays anzugeben.

Die Aufgabe wird mit einer Anordnung nach Anspruch 1 gelöst.

Der Erfindung liegt die Beobachtung zugrunde, dass in vielen der heutigen Mikroprozessoren, wie beispielsweise dem MGT5200 der Fa. Motorola, standardmäßig eine Ethernet-Schnittstelleneinheit integriert ist, mit deren Hilfe Daten direkt auf einem Ethernet-Bus ausgegeben und von dort empfangen werden können. Die maximale Länge eines über den Ethernet-Bus übertragbaren Datenpaketes beträgt laut Ethernet-Spezifikation 1500 Bytes. Im Vergleich dazu werden für eine Bildzeile eines Displays mit einer horizontalen Auflösung von 400 Bildpunkten und einer Farbtiefe von 16 Bit (2 Byte) je Bildpunkt 800 Byte an Bilddaten benötigt. Die maximale Größe eines Ethernet-Datenpaketes wäre also ausreichend, um die Datenmenge zur Ansteuerung einer solchen Bildzeile zu fassen und mit einem Mal zu übertragen. Die Ansteuerung eines Displays erfolgt nun im allgemeinen so, dass, beginnend in der oberen linken Ecke des Bildschirm, die Bildsignale für die Bildpunkte einer Bildzeile direkt aufeinander folgend übertragen werden, gefolgt von einem Zeilenrücklauf mit kurzzeitiger Dunkelschaltung des Bildschirms, woraufhin die nächste Bildzeile als geschlossene Datenfolge übertragen wird. Mit der mindestens einer Bildzeile entsprechenden Größe eines Ethernet-Datenpaketes könnte also gewährleistet werden, dass die zur Ansteuerung einer Bildzeile erforderlichen Bildsignale rechtzeitig dem Display zur Verfügung gestellt werden können. Wird die maximale Paketgröße eines Ethernet-Datenpaketes voll ausgenutzt, können sogar Displays mit höherer Zeilenauflösung oder größerer Farbtiefe als in dem Beispiel angesteuert werden. Bei kleinen Displays mit geringer Auflösung und Farbtiefe wäre es des Weiteren denkbar, dass ganze Bilder pro Datenpaket übertragen werden.

Die vorliegende Erfindung besteht demnach darin, eine Schnittstelle eines digitalen Datenbusses zur Ansteuerung eines Grafikdisplays zu verwenden, wobei die über die Bus-Schnittstelle übertragbare maximale Größe eines Datenpaketes mindestens der zur Ansteuerung einer Bildzeile erforderlichen Datenmenge entspricht. Da jedoch ein Grafikdisplay das Bus-Datenformat nicht direkt in ein Bild umsetzen kann, müssen die Bilddaten noch umgewandelt werden.

Dementsprechend schlägt die Erfindung vor, eine speziell an die Aufgabe der Umwandlung der Bildinformation vom Bus-Datenformat in das erforderliche Grafik-Format angepasste Umwandlungseinheit zu verwenden.

Bevorzugt wird dafür ein kundenspezifischer integrierter Baustein (customized IC) verwendet, dessen innerer Aufbau und damit Funktionsweise nicht durch den Hersteller sondern erst durch den Anwender festgelegt wird. Ein Beispiel dafür sind ASICs (Application Specific IC). Eine besonders preiswerte Unterform der kundenspezifischen Bausteine sind die programmierbaren Logikbausteine, wie beispielsweise die CPLD (Complex Programmable Logic Device) und FPGA (Field Programmable Gate Array). In einen kundenspezifischen IC könnte neben der Umwandlungseinheit auch gleichzeitig ein Digital-Analog-Wandler mitintegriert werden, sofern ein analoges Display angesteuert werden soll.

Während die ASICs bereits eine deutliche Kostenersparnis im Vergleich zu Grafikkontrollern mit sich bringen, stellen die programmierbaren Logikbausteine momentan sowohl die preiswerteste als auch die schnellste Lösung dar, um eine gewünschte Funktionalität in Hardware zu realisieren. Die CPLD sind dabei insbesondere für die Realisierung kombinatorischer und sequentieller Logik geeignet, während mit FPGA bevorzugt arithmetische Funktionen umgesetzt werden. Alternativ kann die Umwandlungseinheit auch aus diskreten Bauteilen aufgebaut sein.

Die von einer Recheneinheit erzeugte Bildinformation wird also erfindungsgemäß von der Recheneinheit über eine Datenbus-Schnittstelle an eine Umwandlungseinheit übertragen, welche die Bildinformation aus dem Bus-Datenformat ausliest und in Bildsignale zur Ansteuerung der einzelnen Bildpunkte umwandelt sowie Bildsteuersignale zur Koordinierung des Bildaufbaus erzeugt und die Bildsignale und Bildsteuersignale an ein Grafikdisplay zur Darstellung sendet.

Die Verwendung der Kombination aus Datenbus und Umwandlungseinheit anstelle eines Grafikkontrollers spart nicht nur Kosten sondern auch Bauraum, da die Datenbus-Schnittstelle im allgemeinen bereits in die Recheneinheit integriert ist und die Umwandlungseinheit weniger Platz als ein Grafikkontroller benötigt. Anstelle von Recheneinheiten mit integriertem Grafikkontroller können nun ausschließlich solche ohne Grafikkontroller eingesetzt werden. Dies ist insbesondere bei der Entwicklung von Geräten von Vorteil, die sowohl mit als auch ohne Display vorgesehen sind, da in diesem Falle normalerweise aus Kostengründen zwei Arten von Mikroprozessoren bzw. Mikrocontrollern gepflegt werden - einmal die teureren Prozessoren mit und einmal die preiswerteren ohne Grafikkontroller. Diese unerwünschte Variantenvielfalt lässt sich nun reduzieren, indem bei vorhandenem Display lediglich die Umwandlungseinheit hinzugefügt und kleinere Änderungen in der Ansteuersoftware der Datenbus-Schnittstelle vorgesehen werden müssen.

Besonders leistungsfähige Mikroprozessoren werden außerdem häufig ausschließlich ohne Grafikkontroller angeboten. Soll in solch einem Fall ein Display angesteuert werden, kann nun die kostengünstigere, erfindungsgemäße Lösung gewählt werden.

Als zu verwendender Datenbus-Typ kommt neben dem Ethernet jeder digitale Datenbus in Frage, der sich von extern synchronisieren lässt, einen kontinuierlichen Datenstrom gewährleistet und schnell genug ist, um die Bilddaten rechtzeitig zur Umwandlungseinheit zu befördern, so dass die Bildsignale stets synchron zur Ansteuerung des Grafikdisplays zur Verfügung stehen.

In einer vorteilhaften Ausgestaltung der Erfindung ist die Recheneinheit mit einer Speichereinheit verbunden, in welcher die Bildinformation zwischengespeichert werden kann, um sie zeitlich synchronisiert mit dem Bildaufbau des Grafikdisplays auslesen zu können. Die Recheneinheit liest die Bildinformation bevorzugt Bildzeile für Bildzeile aus dem Speicher aus und gibt sie über die Datenbus-Schnittstelle an die Umwandlungseinheit weiter. Das Auslesen kann dabei im Gleichtakt zur Zeilenfrequenz des Grafikdisplays erfolgen.

Die Erfindung wird nachfolgend anhand eines Ausführungsbeispiels und der Zeichnung näher erläutert. Es zeigt:

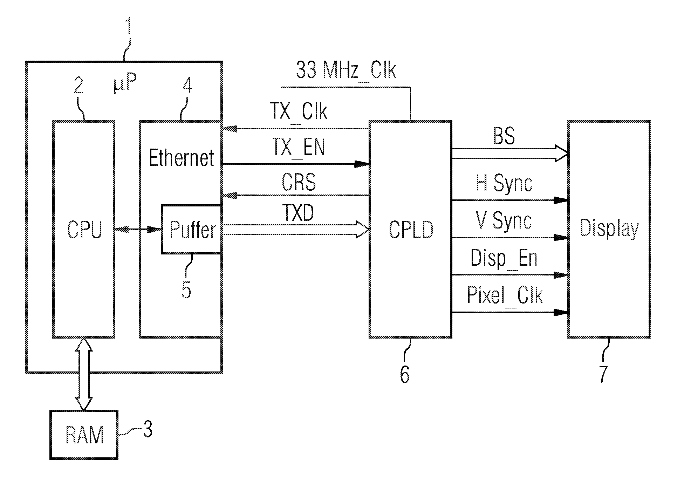

- Fig. 1: Anordnung zur Ansteuerung eines digitalen Grafikdisplays über eine Ethernet-Schnittstelle und ein CPLD.

Die in Figur 1 dargestellte Anordnung zur Ansteuerung eines digitalen Grafikdisplays besteht aus einem Mikroprozessor 1, der eine CPU 2 sowie eine Ethernet-Bus-Schnittstelle 4 inklusive Ethernet-Sendepuffer 5 enthält, einem mit dem Mikroprozessor 1 verbundenen Arbeitsspeicher 3, einer als CPLD ausgeführten Umwandlungseinheit 6 und einem Farb-LCD als digitalem Display 7. Der Mikroprozessor 1 und das CPLD 6 sind über eine 4-Bit-breite, parallele Datenleitung TXD sowie über die Signalleitungen TX_CLK, TX_EN und CRS miteinander verbunden. Zwischen dem CPLD 6 und dem Display 7 bestehen eine 16-Bit-breite Bildsignal-Verbindung BS sowie Verbindungen für die Bildsteuersignale H_Sync, V_Sync, Disp_En und Pixel_Clk.

Die Ethernet-Schnittstelle 4 wird hauptsächlich durch eine so genannte MAC-Einheit (Media Access Controller) gebildet, welche nach dem Fast-Ethernet-Standard IEEE-802.3 arbeitet. Die von der MAC-Einheit ausgegebenen Daten entsprechen dem MII-Schnittstellen-Format (Media Independent Interface). Der MII-Standard legt beispielsweise fest, dass voneinander unabhängige 4-Bit-breite Sende- sowie Empfangs-Datenkanäle verwendet werden. Für die in Fig. 1 dargestellte Ausführung wird davon lediglich der Sendekanal TXD benötigt. Die kleinste, theoretisch übertragbare Dateneinheit beträgt demnach 4 Bit. Diese wird auch als Nibble bezeichnet. Da der Mikroprozessor byteweise (8 Bit) arbeitet, sind tatsächlich 2 Nibble als kleinste Dateneinheit übertragbar.

Auf dem Sendekanal werden einzelne Datenpakete (Frames), zusammengesetzt aus jeweils 4 Bit großen Nibbles, entsprechend dem in Tabelle 1 gezeigten Aufbau eines Busdaten-Frames versendet.

**Tabelle 1:**

| Aufbau eines Busdaten-Frames | |
|---|---|
| Größe in Byte | **Inhalt** |
| 7 | Präambel |
| 1 | Frame-Anfangskennzeichnung |
| 1 bis 1500 | Daten |

Die Bildinformation ist in dem letzten Feld eines Datenpaketes, dem 1 bis 1500 Byte großen Datenbereich, enthalten

Gegenüber der Ethernet-Spezifikation wurden in den Frames überflüssige, das heißt für die Displayansteuerung nicht benötigte, Felder weggelassen, wie die Empfänger-Adresse, die Absender-Adresse, das Typ-Feld und die CRC-Checksumme. Der Datenbereich wurde nach unten erweitert. Laut Ethernet-Spezifikation sollten mindestens 46 Byte Daten im Datenfeld enthalten sein. Für die hier beschriebene Anwendung ist es jedoch theoretisch auch möglich, nur 1 Byte zu übertragen. Ebenso wäre es denkbar, den Datenbereich auch nach oben zu erweitern, also von der Ethernet-spezifischen Grenze der 1500 Byte weg hin zu noch größeren Datenpaketen. Dies könnte beispielsweise bei Displays mit deutlich größerer Auflösung erforderlich werden, bei denen eine Bildzeile nicht mehr in 1500 Byte unterzubringen ist.

Wie in Figur 1 zu sehen ist, wird der CPLD 6 mit einem 33 MHz-Takt (33MHz_CLK) versorgt. Aus diesem Takt generiert der Logikbaustein 6 die Bildsteuersignale Pixel_Clk für den Wechsel von Bildpunkt zu Bildpunkt, H_Sync für den Zeilenrücklauf und V_Sync für den Bildrücklauf und damit die Bildwiederholung. Der Pixel-Takt (Pixel_Clk) wird dabei als Viertel des 33 MHz-Taktes erzeugt, woraus eine Frequenz von 8,25 MHz resultiert.

Der 33MHz-Takt wird vom CPLD 6 unverändert an die Ethernet-Schnittstelle 4 weitergereicht (TX_Clk), worüber die Taktfrequenz des Ethernet-Busses bestimmt wird. Die einzelnen Nibble auf dem Sendekanal TXD werden also mit 33 MHz übertragen. Die Taktfrequenz ist entsprechend der Geschwindigkeits-Anforderungen des Display 7 gewählt worden, wobei eine Voraussetzung war, dass die Ethernet-Schnittstelle 4 den gewünschten Takt auch tatsächlich unterstützt.

Das zweite vom CPLD 6 an die Ethernet-Schnittstelle 4 ausgegebene Signal ist das CRS-Signal. Dieses dient dazu, die Ethernet-Schnittstelle 4 nach der Übertragung eines Frames und damit einer Bildzeile so lange anzuhalten bis die nächste Bildzeile vom CPLD 6 verarbeitet und an das Display 7 gesendet werden kann. Das CRS-Signal läuft also synchron mit der Zeilenfrequenz H_Sync. Ohne das CRS-Signal würde die Ethernet-Schnittstelle 4 dauerhaft senden, was zu einem Verlust der Synchronisation führen würde. Nach der Übertragung der letzten Bildzeile eines Bildes dient das CRS-Signal weiterhin dazu, den Sendevorgang der Ethernet-Schnittstelle 4 bis zum Beginn des nächsten Bildes zu unterbrechen. Dadurch wird eine Synchronität zum V_Sync hergestellt.

Neben den eigentlichen Daten auf dem TXD-Kanal überträgt die Ethernet-Schnittstelle 4 das Signal TX_EN an den Logikbaustein 6. Mit diesem Signal werden der Beginn und das Ende eines Ethernet-Frames angezeigt.

In dem Beispiel aus Fig. 1 wird ein LCD-Grafikdisplay 7 mit einem sichtbaren Bereich von 400 Bildpunkten x 240 Bildzeilen verwendet. Die Farbtiefe beträgt 16 Bit (2 Byte) pro Bildpunkt. Ein Bild passt demnach in einen Speicherbereich von 400 x 2 x 240 = 192 000 Byte (rund 188 kByte) und eine Bildzeile in 400 x 2 = 800 Byte.

Die Mikroprozessor 1 erzeugt, gesteuert durch die CPU 2, die darzustellenden Bilder von je 188 kByte und legt sie in seinem Arbeitsspeicher 3 ab. Von dort veranlasst die CPU 2 das Abholen der Bilder Bildzeile für Bildzeile und das entsprechende Füllen des Ethernet-Sendepuffers 5.

Damit sichergestellt ist, dass nach erfolgtem Auslesen des Sendepuffers 5 und Übertragen einer Bildzeile durch die Ethernet-Schnittstelle 4 rechtzeitig die nächste Bildzeile im Sendepuffer zur Verfügung steht, muss entweder ein hochpriorisierter und schneller Zugriff der CPU 2 auf den Arbeitsspeicher 3 und den Sendepuffer 5 gewährleistet sein oder es wird ein DMA-Kontroller (Direct Memory Access) verwendet, welcher die Speicherzugriffe ohne Mitwirkung der CPU 2 ausführt.

Aus dem Sendepuffer 5 werden die Daten 4-Bit-weise zu einem Busdaten-Frame zusammengestellt und entsprechend dem durch TX_CLK vorgegebenen Bustakt an das CPLD 6 gesendet. Je nach anliegendem CRS-Signal wird die Übertragung zwischen den einzelnen Frames unterbrochen. Die ersten 8 Byte eines Busdaten-Frames werden während der Dunkelschaltung des Bildschirms beim Zeilenrücklauf gesendet. Danach folgt der Datenblock mit den 800 Byte Bildzeilen-Daten.

Die empfangenen Busdaten-Frames wertet das CPLD 6 dahingehend aus, dass es die ersten 8 Byte, den Header, entfernt und damit die reinen Bildinformationen extrahiert. Jeweils 4 Nibble (16 Bit) der empfangenen Bus-Daten enthalten die Informationen für einen Bildpunkt. Diese 4-Nibble-Pakete werden vom CPLD 6 zusammengefasst und entsprechend der im CPLD 6 generierten Timing-Signale Pixel_Clk, H_Sync und V_Sync über den 16-Bit-breiten Bildsignal-Kanal BS an das Display 7 übertragen.

## Patentansprüche

1. Anordnung zur Ansteuerung eines Grafikdisplays (7) mit einer Recheneinheit (1) zur Erzeugung einer darzustellenden Bildinformation, **dadurch gekennzeichnet,**
- **dass** die Recheneinheit (1) mit einer Datenbus-Schnittstelle (4) und diese wiederum mit einer Umwandlungseinheit (6) verbunden ist, an welche das Grafikdisplay (7) angeschlossen ist,
- **dass** die Bildinformation von der Recheneinheit (1) über die Datenbus-Schnittstelle (4) im Bus-Datenformat an die Umwandlungseinheit (6) gesendet wird und
- **dass** die Umwandlungseinheit (6) die Bildinformation aus dem Bus-Datenformat in Bildsignale (BS) umwandelt und Bildsteuersignale (Pixel_Clk, H_Sync, V_Sync) erzeugt und diese Bildsignale und Bildsteuersignale an das Grafikdisplay (7) überträgt,
- wobei die maximale Größe eines Datenpaketes im Bus-Datenformat mindestens der Datenmenge an Bildsignalen entspricht, die zur Ansteuerung einer Bildzeile des Grafikdisplays (7) erforderlich ist.

2. Anordnung nach Anspruch 1, **dadurch gekennzeichnet, dass** pro Datenpaket eine Bildzeile übertragen wird.

3. Anordnung nach einem der vorhergehenden Ansprüche, **dadurch gekennzeichnet, dass** die Recheneinheit (1) mit einer Speichereinheit (3) verbunden ist, welche die Bildinformation zwischenspeichert.

4. Anordnung nach Anspruch 3, **dadurch gekennzeichnet, dass** die Recheneinheit (1) die Bildinformation zyklisch aus der Speichereinheit (3) ausliest und an die Datenbus-Schnittstelle (4) überträgt.

5. Anordnung nach einem der vorhergehenden Ansprüche, **dadurch gekennzeichnet, dass** die Datenbus-Schnittstelle (4) eine Ethernet-Schnittstelle ist.

6. Anordnung nach einem der vorhergehenden Ansprüche, **dadurch gekennzeichnet, dass** die Umwandlungseinheit (6) ein programmierbarer Logikbaustein ist.

7. Anordnung nach einem der vorhergehenden Ansprüche, **dadurch gekennzeichnet, dass** die Umwandlungseinheit (6) ein CPLD ist.

8. Anordnung nach einem der vorhergehenden Ansprüche, **dadurch gekennzeichnet, dass** das Grafikdisplay (7) ein LCD ist.
